# EUROPÄISCHE PATENTSCHRIFT

(11) **EP 3 527 845 B1**
(45) Veröffentlichungstag und Bekanntmachung des Hinweises auf die Patenterteilung: **25.05.2022**
(21) Anmeldenummer: 18000163.8
(22) Anmeldetag: 19.02.2018
(51) Int. Cl.: F16H 1/30

(54) **LAGERANORDNUNG IN EINEM SCHRAUBRAD-PLANETENGETRIEBE**
BEARING ARRANGEMENT IN A CROSSED-AXES PLANET TRANSMISSION
ENSEMBLE DE PALIER D'UN ENGRENAGE PLANÉTAIRE À ROUE HÉLICOÏDALE

(43) Veröffentlichungstag der Anmeldung: 21.08.2019
(73) Patentinhaber: IMS Gear SE & Co. KGaA, 78166 Donaueschingen (DE)
(72) Erfinder: Albert, Simon, 79848 Bonndorf im Schwarzwald (DE); Oberle, Stephan, 78050 Villingen-Schwenningen (DE); Kieninger, Matthias, 78050 Villingen-Schwenningen (DE)
(74) Vertreter: Westphal, Mussgnug & Partner Patentanwälte mbB

(56) Entgegenhaltungen:
- EP-A1- 2 166 252
- WO-A1-2015/036328
- DE-A1- 19 928 385
- US-A- 4 777 847

## Beschreibung

Die vorliegende Erfindung betrifft eine Motor-Getriebeanordnung mit einem Elektromotor und einem Schraubrad-Planetengetriebe insbesondere für eine Verstelleinrichtung in Fahrzeugen zum Verstellen zweier zueinander verstellbarer Fahrzeugteile. Weiterhin betrifft die Erfindung ein Verfahren zum Herstellen einer Lagerungsanordnung zum Lagern einer Schraubradwelle eines Schraubrad-Planetengetriebes insbesondere für eine Verstelleinrichtung in Fahrzeugen zum Verstellen zweier zueinander verstellbarer Fahrzeugteile.

Planetengetriebe finden in vielen Antriebssträngen Verwendung, da sie große Über- oder Untersetzungsverhältnisse auf kleinem Raum ermöglichen. Ein Anwendungsbereich stellen Hilfsantriebe für Kraftfahrzeuge dar, mit denen zwei zueinander verstellbare Fahrzeugteile relativ zueinander bewegt werden können. Ein Beispiel für derartige Hilfsantriebe sind elektromechanische Aktuatoranordnungen, die unter anderem zum Betätigen von Parkbremsen von Kraftfahrzeugen eingesetzt werden. Andere Hilfsantriebe werden beispielsweise für Sitzlängsverstellungen, Heccklappenverstellungen, Fensterheber und Schiebedachverstellungen eingesetzt. Da in Kraftfahrzeugen der zur Verfügung stehende Raum knapp bemessen ist, können Planetengetriebe ihre Vorteile hier besonders gut ausspielen.

Bei Hilfsantrieben werden nahezu ausnahmslos Elektromotoren als Antriebsquelle eingesetzt. Die typischerweise verwendeten Elektromotoren drehen häufig mit einer vergleichsweise hohen Drehzahl, so dass hohe Untersetzungen erforderlich sind, um die Fahrzeugteile mit der gewünschten, vergleichsweise langsamen Bewegung relativ zueinander verstellen zu können. Zudem sind die vom Elektromotor abgegebenen Drehmomente häufig nicht ausreichend, um die Fahrzeugteile bewegen zu können, so dass auch aus diesem Grund Untersetzungen notwendig sind.

Auch wenn bekannte Planetengetriebe hohe Über- oder Untersetzungsverhältnisse bereitstellen können, reichen diese in einigen Anwendungsbereichen nicht aus, so dass man gezwungen ist, zwei- oder mehrstufige Getriebe zu verwenden, in welchen zwei oder mehrere Planetengetriebe im Antriebsstrang angeordnet sind. Hierdurch wird die Komplexität des Antriebsstrangs erhöht, wodurch im Vergleich zu einem einstufigen Schraubrad-Planetengetriebe die Fertigung verkompliziert, die Ausfallwahrscheinlichkeit erhöht und der Bauraum vergrößert werden.

Eine Möglichkeit, die Über- oder Untersetzungsverhältnisse von Planetengetrieben zu steigern, liegt in der Verwendung von sogenannten "Koaxial-Getrieben". Die Zahnräder von üblichen Planetengetrieben sind als Stirnräder ausgebildet. Bei Koaxial-Getrieben ist das Sonnenrad als eine Schnecke und die Planetenräder mit einer entsprechend angepassten Planetenradverzahnung ausgebildet. Das Hohlrad weist eine der Planetenradverzahnung entsprechende Innenverzahnung auf.

Ein besonders auffälliges Merkmal derartiger Koaxial-Getriebe ist die Tatsache, dass die Planetenradachsen nicht parallel zur Drehachse der Schnecke, sondern windschief hierzu verlaufen. Zumindest diesbezüglich ist der Begriff "Koaxial-Getriebe" nicht zutreffend, so dass derartige Getriebe im Folgenden als Schnecken-Planetengetriebe bezeichnet werden. Derartige Schnecken-Planetengetriebe sind beispielsweise in der US 4 777 847 A, der, WO 2015/036328 A1 und der EP 2 166 252 A1 offenbart. Neben der hohen Über- oder Untersetzungsverhältnisse stellen derartige Schnecken-Planetengetriebe ein ruhiges Laufverhalten bei einer geringen Geräuschentwicklung bereit.

Die DE 199 28 385 A1 offenbart ein Planetengetriebe, bei dem die Planetenradachsen in einer Ebene zur Drehachse des Sonnenrads verlaufen, mit dieser aber einen _Winkel einschließen, so dass die Planetenradachsen nicht parallel zur Drehachse des Sonnenrads verlaufen. Das Sonnenrad ist als Kegelrad und nicht als Schneckenrad ausgebildet.

Auch wenn diese Art von Planetengetriebe hohe Über- oder Untersetzungsverhältnisse bei einer geringen Geräuschentwicklung bereitstellen, weisen sie die Eigenschaft auf, dass hohe Axialkräfte auf die Schnecke und das Hohlrad wirken, die abhängig von der Drehrichtung in die eine oder die entgegengesetzte Richtung gerichtet sind. Diese von der Drehrichtung abhängig wirkenden Axialkräfte werden in der EP 2 166 252 A1 für eine axiale Verschiebung beispielsweise des Hohlrads verwendet, um hierdurch das dort gezeigte Schneckenrad-Planetengetriebe für eine Drehrichtung zu sperren und eine Art Selbsthemmung bereitzustellen. Insofern werden in der EP 2 166 252 A1 keine besonderen Vorkehrungen zum Aufnehmen der wirkenden Axialkräfte getroffen. In der WO 2015/036328 A1 ist die Welle, auf welcher die Schnecke angeordnet ist, mit zwei Lagern auf jeweils einer Seite der Schnecke innerhalb des Planetenträgers gelagert. Hierdurch wird einerseits ein bestimmter Bauraum benötigt und andererseits die Montage verkompliziert.

Aufgabe einer Ausführungsform der vorliegenden Erfindung ist es daher, eine Motor-Getriebeanordnung insbesondere für eine Verstelleinrichtung in Fahrzeugen zum Verstellen zweier zueinander verstellbarer Fahrzeugteile anzugeben, mit welcher den oben genannten Nachteilen begegnet werden kann. Insbesondere soll es die Motor-Getriebeanordnung ermöglichen, gegenüber bekannten Planetengetrieben mit windschief zur Schraubradwellenachse verlaufen Schraubrad-Planetenradachsen den benötigten Bauraum zu reduzieren und die Montage zu vereinfachen.

Diese Aufgabe wird mit den in den Ansprüchen 1 und 3 angegebenen Merkmalen gelöst. Vorteilhafte Ausführungsformen sind Gegenstand der Unteransprüche.

Eine Ausführungsform einer in einer Motor-Getriebeanordnung zur Anwendung kommenden Lagerungsanordnung zum Lagern einer Schraubradwelle eines Schraubrad-Planetengetriebes insbesondere für eine Verstelleinrichtung in Fahrzeugen zum Verstellen zweier zueinander verstellbarer Fahrzeugteile ist so gestaltet, dass das Schraubrad-Planetengetriebe eine Schraubradwelle mit einer Schraubradverzahnung, welches um eine Schraubradwellenachse drehbar gelagert ist, und einen Planetenträger mit zumindest drei Schraubrad-Planetenrädern umfasst, die jeweils um eine Planetenradachse drehbar im Planetenträger gelagert sind und jeweils eine Planetenradverzahnung aufweisen, wobei die Schraubrad-Planetenradachsen windschief zur Schraubradwellenachse verlaufen, und die Lagerungsanordnung zum Lagern der Schraubradwelle einen ersten Lagerungsabschnitt und einen zweiten Lagerungsabschnitt aufweist, wobei der erste Lagerungsabschnitt außerhalb des Planententrägers angeordnet ist und von einem Axial- und Radiallager gebildet wird und wobei der zweite Lagerungsabschnitt von den Schraubrad-Planetenrädern gebildet wird, wobei die Planetenradverzahnung im zweiten Lagerungsabschnitt mit der Schraubradverzahnung in Eingriff steht. Unter einer Schraubradwelle soll ein mit der Lagerungsanordnung drehbar gelagertes Bauteil verstanden werden, welches eine Schraubradverzahnung aufweist. Die Schraubradwelle soll insbesondere von einer Motorwelle antreibbar sein.

Die vorliegende Erfindung bezieht sich auf Schraubrad-Planetengetriebe und nicht auf Schnecken-Planetengetriebe, wie sie in der WO 2015/036328 A1 und der EP 2 166 252 A1 offenbart sind. Allerdings weisen Schraubrad-Planetengetriebe eine große Ähnlichkeit mit Schnecken-Planetengetrieben auf. Während bei Schraubrad-Planetengetrieben am Schraubrad ein punktförmiger Kontakt mit den Schraubrad-Planetengetrieben vorliegt, die bei Belastung zu einer sogenannten Druckellipse wird, liegt bei einem Schnecken-Planetengetriebe aufgrund der globoiden Form des Verzahnungsabschnitts der Schnecke und den Planetenrädern eine Linienberührung vor. Bei beiden Arten von Planetengetrieben wirken jedoch hohe axiale Kräfte auf die Schneckenwelle bzw. die Schraubradwelle.

Dadurch, dass der erste Lagerungsabschnitt der vorschlagsgemäßen Lagerungsanordnung der Schraubradwelle von einem Axial-und Radiallager gebildet wird, können die wirkenden Axialkräfte vollständig oder nahezu vollständig vom ersten Lagerungsabschnitt aufgenommen werden. Der zweite Lagerungsabschnitt wird von den Schraubrad-Planetenrädern gebildet, die so ausgestaltet sind, dass sie eine besonders gute radiale Führung der Schraubradwelle im Bereich der Schraubradverzahnung bereitstellen. Auch die Verwendung von mindestens drei Schraubrad-Planetenrädern trägt zur guten radialen Führung der Schraubradwelle im zweiten Lagerungsabschnitt bei. Folglich kann im Gegensatz zu der in der WO 2015/036328 A1 gezeigten Lagerungsanordnung auf ein zweites Axial- und Radiallager verzichtet werden. Hierdurch wird einerseits der axiale Bauraum verringert, andererseits wird die Montage der vorschlagsgemäßen Lagerungsanordnung vereinfacht. Die Montage wird im Vergleich zu der in der WO 2015/036328 A1 gezeigten Lagerungsanordnung zudem auch dadurch vereinfacht, dass das Axial- und Radiallager außerhalb des Planetenträgers angeordnet ist. Da die Anzahl der Bauteile reduziert wird, lassen sich auch die Kosten der vorschlagsgemäßen Lagerungsanordnung im Vergleich zu bekannten Lagerungsanordnungen reduzieren. Zudem folgt aus der Reduzierung der Anzahl der Bauteile eine Verringerung der Ausfallwahrscheinlichkeit der Lagerungsanordnung.

Es hat sich herausgestellt, dass sich in den angegebenen Bereichen für die Balligkeit als auch für die Profilüberdeckungen eine besonders gute Lagerung der Schraubradwelle im zweiten Lagerungsabschnitt erreichen lässt, die zu einem ruhigen Laufverhalten bei geringer Geräuschentwicklung führt. Die Profilüberdeckung gibt an, wie viele Zahnpaare statistisch gleichzeitig in Eingriff stehen. Um eine kontinuierliche Übertragung des Drehmoments zu gewährleisten, muss der Überdeckungsgrad mindestens 1 betragen. Wenn der Wert des Überdeckungsgrads zwischen 1 und 2 beträgt, kann eine kontinuierliche Übertragung des Drehmoments gewährleistet werden.

Bei einer weitergebildeten Ausführungsform der in einer Getriebeanordnung eingesetzten Lagerungsanordnung kann die Schraubradwelle ein erstes Ende und ein zweites Ende aufweisen und sich die Schraubradverzahnung bis zum zweiten Ende erstrecken. Die Fertigung der Schraubradwelle kann vereinfacht werden, da es nicht notwendig ist, die Schraubradwelle über die Schraubradverzahnung hinaus zum zweiten Ende hin zu verlängern. Ein Werkzeug zum Fertigen der Schraubradverzahnung kann direkt auf die Schraubradwelle aufgebracht werden. Freistiche oder ähnliche Maßnahmen zum Auslaufen des Werkzeugs sind nicht notwendig. Weiterhin kann die Schraubradwelle eine vergleichsweise kurze axiale Erstreckung aufweisen, so dass Material und Gewicht eingespart werden können.

Gemäß einer fortgebildeten Ausführungsform der in einer Getriebeanordnung eingesetzten Lagerungsanordnung kann die Schraubradwelle ein erstes Ende und ein zweites Ende aufweisen, wobei die Schraubradverzahnung ein zum zweiten Ende hinweisendes freies Ende bildet und die Schraubradwelle zwischen dem zweiten Ende und dem freien Ende einen zylindrischen Abschnitt umfasst. Der zylindrische Abschnitt dient insbesondere zur Aufnahme der Schraubradwelle während der Montage. Zudem weist das Vorsehen des zylindrischen Abschnitts aus messtechnischen Gründen Vorteile auf.

Bei einer weiteren Ausführungsform der in einer Getriebeanordnung eingesetzten Lagerungsanordnung kann das Axial- und Radiallager von einem Wälzlager und insbesondere von einem Kugellager gebildet werden. Wälzlager und insbesondere Kugellager können auch vergleichsweise hohe Axialkräfte aufnehmen und zugleich eine radiale Führung bereitstellen. Folglich lässt sich das Axial- und Radiallager mit einem Bauteil realisieren, wodurch die Montage vereinfacht und die Anzahl der Bauteile gering gehalten wird. Kugellager stellen ein besonders kostengünstiges Lager dar, um sowohl Axial- als auch Radialkräfte aufzunehmen.

Bei einer Ausgestaltung einer Getriebeanordnung wird ein Schraubrad-Planetengetriebe insbesondere für eine Verstelleinrichtung in Fahrzeugen zum Verstellen zweier zueinander verstellbarer Fahrzeugteile eingesetzt, umfassend eine Schraubradwelle mit einer Schraubradverzahnung, welches um eine Schraubradwellenachse drehbar gelagert ist, einen Planetenträger mit zumindest drei Schraubrad-Planetenrädern, die jeweils um eine Planetenradachse drehbar im Planetenträger gelagert sind und jeweils eine Planetenradverzahnung aufweisen, wobei die Schraubrad-Planetenradachsen windschief zur Schraubradwellenachse verlaufen, ein Innenschraubrad mit einer Innenverzahnung, welche mit der Planetenradverzahnung in Eingriff steht, und eine Lagerungsanordnung zum Lagern der Schraubradwelle nach einem der vorherigen Ausführungsformen.

Eine Ausbildung der Erfindung betrifft eine Motor-Getriebeanordnung insbesondere für eine Verstelleinrichtung in Fahrzeugen zum Verstellen zweier zueinander verstellbarer Fahrzeugteile nach Anspruch 1.

Die technischen Effekte und Vorteile, die sich mit dem vorschlagsgemäßen Schraubrad-Planetengetriebe und der vorschlagsgemäßen Motor-Getriebeanordnung erreichen lassen, entsprechen denjenigen, die für die vorliegende Lagerungsanordnung erörtert worden sind. Zusammenfassend sei darauf hingewiesen, im Gegensatz zu dem in der WO 2015/036328 A1 gezeigten Schraubrad-Planetengetriebe auf ein zweites Axial- und Radiallager verzichtet werden kann. Hierdurch wird einerseits der axiale Bauraum verringert, andererseits wird die Montage der vorschlagsgemäßen Lagerungsanordnung vereinfacht.

Für die Motor-Getriebeanordnung ergibt sich zudem folgender technischer Effekt: Die Lagerungsanordnung ist so ausgebildet, dass sie die wirkenden Axialkräfte vollständig oder nahezu vollständig aufnimmt. Auf die Motorwelle wirken folglich keine oder nur geringe Axialkräfte, so dass die Lagerung der Motorwelle nicht angepasst werden muss. Folglich kann nahezu jeder Elektromotor ohne nennenswerte konstruktive Änderungen für die hier beschriebene Motor-Getriebeanordnung verwendet werden, wodurch diese für einen großen Anwendungsbereich eingesetzt werden kann.

In einer erfindungsgemäßen Ausbildung der Motor-Getriebeanordnung ist das Axial- und Radiallager in einer Lageraufnahme angeordnet, welche zwischen dem Elektromotor und dem Innenschraubrad angeordnet und drehfest mit dem Elektromotor und dem Innenschraubrad verbunden ist. Mit der Lageraufnahme können insbesondere die wirkenden Axialkräfte so in die Motor-Getriebeanordnung eingeleitet werden, dass insbesondere die Motorwelle nicht oder nur in geringem Maß axial belastet wird. Beschädigungen der Lagerung der Motorwelle infolge einer übermäßigen Beanspruchung durch die wirkenden Axialkräfte werden mit der Lageraufnahme besonders effektiv vermieden. Die Anordnung des Axial- und Radiallagers zwischen dem Elektromotor und dem Innenschraubrad ermöglicht es, das Axial- und Radiallager außerhalb des Planetenträgers anzuordnen, wodurch die Montage der Motor-Getriebeanordnung beispielsweise im Vergleich zu einer in der WO 2015/036328 A1 offenbarten Motor-Getriebeanordnung vereinfacht wird.

Eine weitere Ausbildung zeichnet sich dadurch aus, dass das Innenschraubrad drehfest mit dem Elektromotor verbunden ist. Im Allgemeinen ist es einfacher, das Innenschraubrad drehfest am Elektromotor zu befestigen als das Innenschraubrad zwar axial fixiert, aber drehbar mit dem Elektromotor zu verbinden. Zudem weist die Motor-Getriebeanordnung außen keine drehbaren Teile auf, da das Innenschraubrad den sich drehenden Planetenträger umschließt, wodurch sich die Sicherheit im Betrieb der Motor-Getriebeanordnung erhöhen lässt.

Eine Umsetzung der Erfindung betrifft ein Verfahren zum Herstellen Lageranordnung zum Lagern einer Schraubradwelle eines Schraubrad-Planentengetriebes insbesondere für eine Verstelleinrichtung in Fahrzeugen zum Verstellen zweier zueinander verstellbarer Fahrzeugteile, umfassend folgende Schritte:
- Bereitstellen einer Schraubradwelle mit einem ersten Ende, einem zweiten Ende und einer Schraubradverzahnung,
- Bereitstellen eines ersten Lagerungsabschnitts mittels eines Axial- und Radiallagers,
- Anordnen des Axial- und Radiallagers in einer Lageraufnahme, welche um das Axial- und Radiallager gespritzt ist,
- Bereitstellen eines Planetenträgers mit zumindest drei Schraubrad-Planetenrädern, die jeweils um eine Planetenradachse drehbar im Planetenträger gelagert sind und jeweils eine Planetenradverzahnung aufweisen, wobei die Schraubrad-Planetenradachsen windschief zur Schraubradwellenachse verlaufen und die Planetenräder einen zweiten Lagerungsabschnitt bilden,
- Einbringen der Schraubradwelle in den ersten Lagerungsabschnitt mit dem ersten Ende, und
- Einbringen der Schraubradwelle in den zweiten Lagerungsabschnitt mit dem zweiten Ende derart, dass die Planetenräder im zweiten Lagerungsabschnitt mit der Schraubradverzahnung in Eingriff stehen.

Die technischen Effekte und Vorteile, die sich mit dem vorschlagsgemäßen Verfahren erreichen lassen, entsprechen denjenigen, die für die vorliegende Lagerungsanordnung erörtert worden sind. Zusammenfassend sei darauf hingewiesen, dass auf ein zweites Axial- und Radiallager verzichtet werden kann. Hierdurch wird einerseits der axiale Bauraum verringert, andererseits wird die Montage der vorschlagsgemäßen Lagerungsanordnung vereinfacht.

Nach Entnahme der Lageraufnahme aus einem entsprechend eingerichteten Spritzgusswerkzeug liegt eine Einheit aus der Lageraufnahme und dem Axial- und Radiallager vor, ohne dass ein Montageschritt zum Befestigen des Axial- und Radiallagers in der Lageraufnahme notwendig wäre. Folglich wird die Montage vereinfacht.

Weiterhin betrifft eine Variante der Erfindung die Verwendung eines Schraubrad-Planetengetriebes nach einer der oben erläuterten Ausbildungen und die Verwendung einer Motor-Getriebeanordnung nach einer der zuvor erörterten Ausbildungen für Klappenanordnungen. Derartige Klappenanordnungen beziehen sich insbesondere auf Heckklappen von Kraftfahrzeugen. Motor-Getriebeanordnungen, die im Zusammenhang mit angetriebenen Klappenanordnungen Verwendung finden, sind einer Reihe von Beschränkungen, insbesondere im Hinblick auf den verfügbaren Bauraum, unterworfen, die insbesondere dazu führen, dass einerseits relativ aufwändige und dadurch teure Antriebslösung gewählt werden müssen und andererseits ein erhöhtes Risiko dafür entstehen kann, dass das Getriebe sich infolge der wirkenden Kräfte, die zudem noch je nach Klappenposition variieren können, verklemmt. Die vorschlagsgemäße Motor-Getriebeanordnung und das vorschlagsgemäße Schraubrad-Planetengetriebe erfüllen diese Anforderungen in besonderem Maße, da sie insbesondere einen kurzen axialen Bauraum benötigen und eine geringe Neigung zum Verklemmen aufweisen.

Beispielhafte Ausführungsformen der Erfindung werden im Folgenden unter Bezugnahme auf die beigefügten Zeichnungen näher erläutert. Es zeigen
- Figur 1a): ein Ausführungsbeispiel einer vorschlagsgemäßen Lagerungsanordnung anhand einer perspektivischen Darstellung,
- Figur 1b): das in Figur 1a) gezeigte Ausführungsbeispiel anhand einer seitlichen Teilschnittdarstellung, jeweils im nicht montierten Zustand,
- Figur 1c): das in Figur 1a) gezeigte Ausführungsbeispiel anhand einer seitlichen Teilschnittdarstellung im montierten Zustand,
- Figur 2 bis Figur 7: verschiedene Montageschritte zum Herstellen einer vorschlagsgemäßen Motor-Getriebeanordnung, welche ein Schraubrad-Planetengetriebe mit der in Figur 1a) gezeigten Lagerungsanordnung aufweist, sowohl anhand von perspektivischen Darstellungen als auch von seitlichen Teilschnittdarstellungen,
- Figuren 8a) und 8b): verschiedene Darstellungen einer Schraubradwelle, und
- Figur 9: eine separate Darstellung einer weiteren Ausführungsform einer Lageraufnahme.

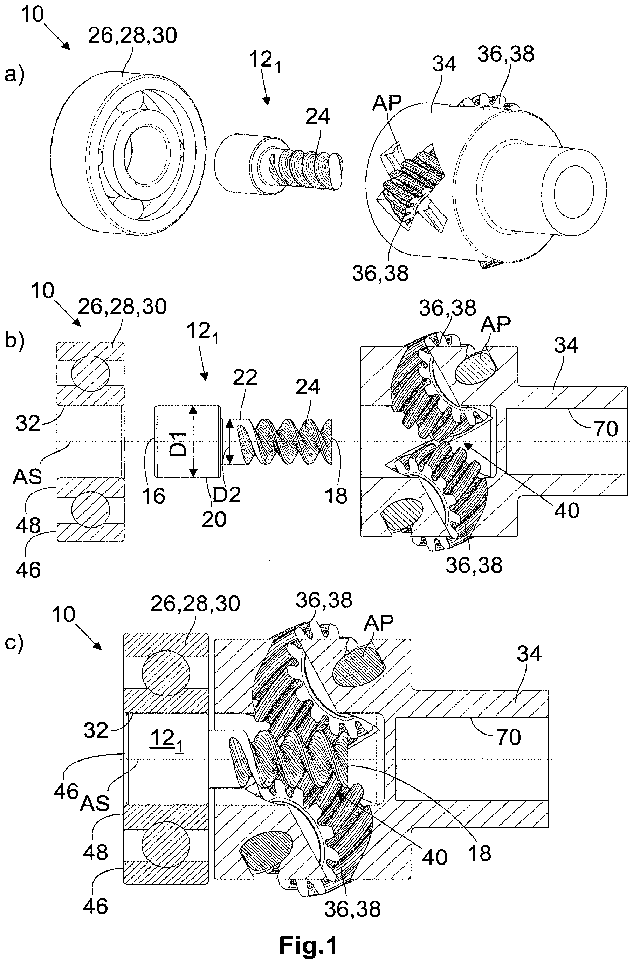

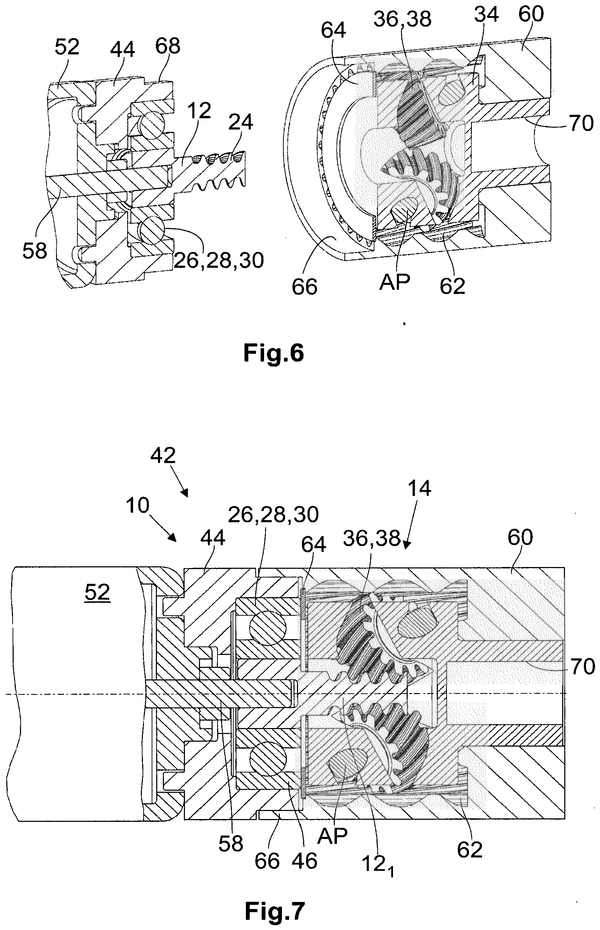

Die Figuren 1a) bis 1c) zeigen ein Ausführungsbeispiel einer erfindungsgemäßen Lagerungsanordnung 10 zum Lagern einer ersten Ausführungsform einer Schraubradwelle 12₁ eines Schraubrad-Planetengetriebes 14 (vgl. Figur 7). In Figur 1a) ist die Lagerungsanordnung 10 anhand einer perspektivischen Darstellung gezeigt, während in Figur 1b) die Lagerungsanordnung 10 anhand einer Seitenansicht gezeigt ist, wobei die Lagerungsanordnung 10 dort teilweise geschnitten dargestellt ist. Sowohl in Figur 1a) als auch in Figur 1b) ist die Lagerungsanordnung 10 im nicht montierten Zustand gezeigt, während sie in Figur 1c) im montierten Zustand dargestellt ist.

Die Lagerungsanordnung 10 umfasst die Schraubradwelle 12₁, welche ein erstes Ende 16 und ein zweites Ende 18 aufweist. Die Schraubradwelle 12₁ lässt sich in einen ersten Abschnitt 20 und einen zweiten Abschnitt 22 aufteilen, die jeweils eine im Wesentlichen zylindrische Form aufweisen. Der erste Abschnitt 20 weist einen ersten Durchmesser D1 und der zweite Abschnitt 22 weist einen zweiten Durchmesser D2 auf, wobei der erste Durchmesser D1 größer als der zweite Durchmesser D2 ist. Der erste Abschnitt 20 bildet dabei das erste Ende 16, während der zweite Abschnitt 22 das zweite Ende 18 bildet.

Darüber hinaus weist die Schraubradwelle 12₁ eine Schraubradverzahnung 24 auf, welche auf dem zweiten Abschnitt 22 angeordnet ist und vom zweiten Ende 18 ausgeht.

Ferner umfasst die Lagerungsanordnung 10 ein Axial- und Radiallager 26, welches im dargestellten Ausführungsbeispiel als ein Wälzlager 28, hier als ein Kugellager 30 ausgestaltet ist. Das Axial- und Radiallager 26 bildet einen ersten Lagerungsabschnitt 32 zum Lagern der Schraubradwelle 12₁.

Zudem umfasst die Lagerungsanordnung 10 einen Planetenträger 34, in welchem drei Planetenräder 36 um jeweils eine Planetenradachse AP drehbar gelagert sind. Die Planetenräder 36 weisen eine Planetenradverzahnung 38 auf, welche auf die Schraubradverzahnung 24 der Schraubradwelle 12₁ abgestimmt ist. Die Planetenradverzahnung 38 bildet einen zweiten Lagerungsabschnitt 40 zum Lagern der Schraubradwelle 12₁.

Wie insbesondere aus Figur 1c) ersichtlich, wird die Schraubradwelle 12₁ mit ihrem ersten Abschnitt 20 in das Axial- und Radiallager 26 so eingebracht, dass radial und axial wirkende Kräfte von der Schraubradwelle 12₁ auf das Axial- und Radiallager 26 übertragen werden können. Hierzu kann die Schraubradwelle 12₁ mit dem ersten Abschnitt 20 im Axial- und Radiallager 26 verpresst werden. Darüber hinaus wird die Schraubradwelle 12₁ mit der Schraubradverzahnung 24 so in den zweiten Lagerungsabschnitt 40 eingebracht, dass die Planetenradverzahnung 38 der Planetenräder 36 mit der Schraubradverzahnung 24 in Eingriff steht. Die Schraubradwelle 12₁ ist folglich um eine Schraubradwellenachse AS drehbar gelagert. Zu bemerken ist, dass die Schraubrad-Planetenradachsen AP der Planetenräder 36 windschief zur Schraubradwellenachse AS verlaufen, wie insbesondere aus Figur 1c) zu erkennen.

Aus der Figur 1c) geht zudem hervor, dass das zweite Ende 18 der Schraubradwelle 12₁ im montierten Zustand axial nicht über die Planetenräder 36 übersteht, sondern von den Schraubrad-Planetenrädern 36 abschnittsweise umschlossen wird. Weiterhin ist aus der Figur 1c) ersichtlich, dass der erste Lagerungsabschnitt 32 außerhalb des Planetenträgers 34 angeordnet ist. Das Verpressen der Schraubradwelle 12₁ im Axial- und Radiallager 26 kann damit ebenfalls außerhalb des Planetenträgers 34 erfolgen, was die Montage vereinfacht.

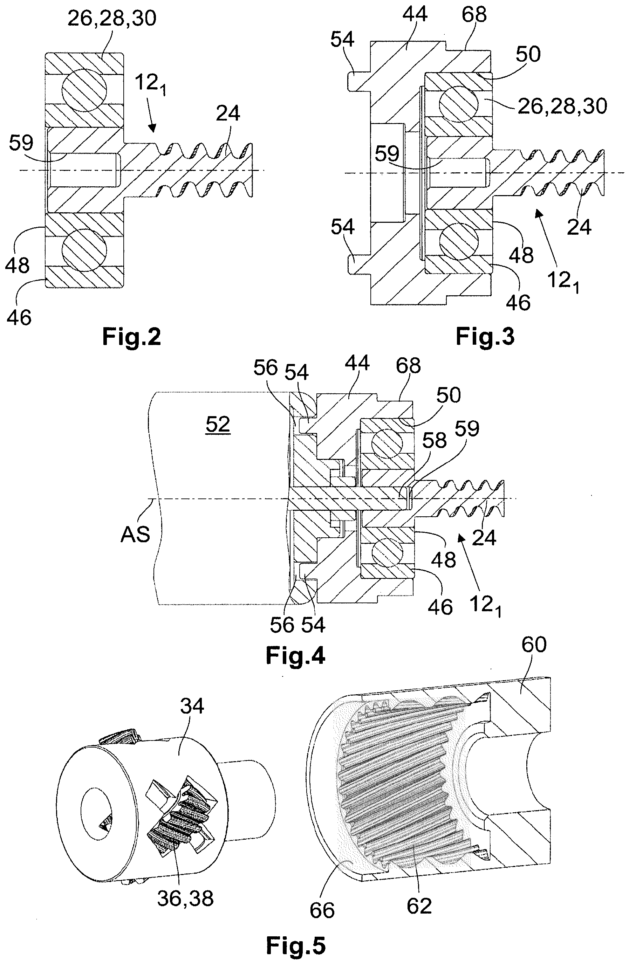

In den Figuren 2 bis 7 sind verschiedene Verfahrensschritte zum Herstellen einer vorschlagsgemäßen Motor-Getriebeanordnung 42 gezeigt, welche das Schraubrad-Planetengetriebe 14 mit der in den Figuren 1a) bis 1c) gezeigten Lagerungsanordnung 10 aufweist.

Ausgehend von der Figur 1a) wird zunächst die Schraubradwelle 12₁ mit ihrem ersten Abschnitt 20 im Axial- und Radiallager 26 verpresst, so dass die in Figur 2 gezeigte Konfiguration erhalten wird. Das im dargestellten Ausführungsbeispiel als das Kugellager 30 ausgebildete Axial- und Radiallager 26 weist einen Außenring 46 und einen Innenring 48 auf.

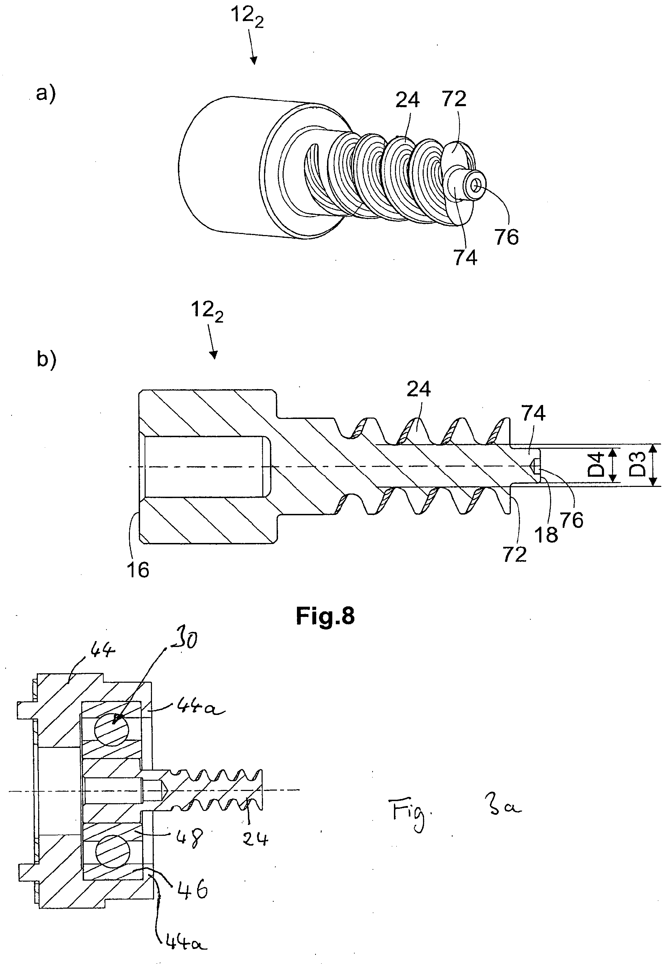

Anschließend wird das Axial- und Radiallager 26 in eine Lageraufnahme 44 eingebracht, wie aus Figur 3 erkennbar. Der Innenring 48 ist mit dem ersten Abschnitt 20 der Schraubradwelle 12₁ verbunden. Die Lageraufnahme 44 weist eine Vertiefung 50 auf, deren Durchmesser in etwa dem Außendurchmesser des Außenrings 46 entspricht. Der Außendurchmesser des Außenrings 46 kann ein gewisses Übermaß gegenüber dem Durchmesser der Vertiefung 50 aufweisen, so dass der Außenring 46 mittels eines Reibschlusses in der Vertiefung 50 fixiert werden kann. Weiterhin liegt der Außenring 46 in axialer Richtung in der Vertiefung 50 an der Lageraufnahme 44 an, so dass das Axial- und Radiallager 26 in einer axialen Richtung fixiert ist.

Anschließend wird die Lageraufnahme 44 mit einem Elektromotor 52 drehfest verbunden, wie aus Figur 4 hervorgeht. Insbesondere aus Figur 3 ist erkennbar, dass die Lageraufnahme 44 eine Anzahl von Vorsprüngen 54 aufweist, welche in entsprechende Ausnehmungen 56 des Elektromotors 52 eingreifen und somit ein Verdrehen der Lageraufnahme 44 gegenüber dem Elektromotor 52 verhindern. Zur axialen Sicherung der Lageraufnahme 44 gegenüber dem Elektromotor 52 können die Vorsprünge 54 gegenüber den Ausnehmungen 56 ein gewisses Übermaß aufweisen, so dass ein Reibschluss entsteht. Alternativ oder kumulativ kann die Lageraufnahme 44 auch am Elektromotor 52 verklebt, verschraubt oder verschweißt werden.

Der Elektromotor 52 weist eine Motorwelle 58 auf, welche aus dem Elektromotor 52 herausragt. Die Schraubradwelle 12₁ bildet eine Motorwellenaufnahme 59, mit welcher die Motorwelle 58 beim Verbinden der Lageraufnahme 44 mit dem Elektromotor 52 in Eingriff gebracht wird. Die Querschnitte der Motorwelle 58 und der Motorwellenaufnahme 59 sind so gewählt, dass ein Drehmoment übertragen werden kann. Hierzu können die Querschnitte beispielsweise quadratisch oder sechseckig ausgebildet sein.

In Figur 5 ist der in den Figuren 1a) bis 1c) dargestellte Planetenträger 34 zu sehen, der nun in ein Innenschraubrad 60 eingebracht wird, welches eine Innenverzahnung 62 aufweist, die auf die Planetenradverzahnung 38 abgestimmt ist. Wie aus Figur 6 erkennbar, wird eine Distanzscheibe 64 in das Innenschraubrad 60 eingebracht und zur axialen Anlage im Innenschraubrad 60 gebracht, nachdem der Planetenträger 34 so in das Innenschraubrad 60 eingefügt wurde, dass die Planetenradverzahnung 38 in Eingriff mit der Innenverzahnung 62 des Innenschraubrads 60 steht.

Das Innenschraubrad 60 weist einen ringförmigen Kragen 66 auf, mit welchem das Innenschraubrad 60 auf einen entsprechend ausgebildeten Absatz 68 der Lageraufnahme 44 aufgeschoben wird. Gleichzeitig wird die Schraubradverzahnung 24 in Eingriff mit der Planetenradverzahnung 38 gebracht. Das Kugellager 30 liegt dabei mit dem Außenring 46 an der Distanzscheibe 64 an, so dass das Kugellager 30 axial einerseits an der Lageraufnahme 44 und andererseits an der Distanzscheibe 64 anliegt und folglich axial gesichert ist.

Um das Innenschraubrad 60 und die Lageraufnahme 44 miteinander zu verbinden, werden das Innenschraubrad 60 und die Lageraufnahme 44 miteinander verschweißt, beispielsweise durch Laserdurchstrahlschweißen. Die Motor-Getriebeanordnung 42 ist nun vollständig montiert. Das Innenschraubrad 60 ist drehfest mit der Lageraufnahme 44 befestigt, die wiederum drehfest mit dem Elektromotor 52 verbunden ist.

Das Schraubrad-Planetengetriebe 14 wird von der Schraubradwelle 12₁, dem Planetenträger 34, den Schraubrad-Planetenrädern 36 und dem Innenschraubrad 60 gebildet. Da das Innenschraubrad 60 drehfest ist, erfolgt der Abtrieb über den sich drehenden Planetenträger 34, welcher hierzu eine Mitnahme 70 für eine nicht dargestellte Abtriebswelle aufweist.

In den Figuren 8a) und 8b) ist ein zweites Ausführungsbeispiel der Schraubradwelle 12₂ anhand einer perspektivischen Darstellung bzw. anhand einer Schnittdarstellung gezeigt. Im zweiten Ausführungsbeispiel erstreckt sich die Schraubradverzahnung 24 nicht bis zum zweiten Ende 18 der Schraubradwelle 12₂, sondern die Schraubradverzahnung 24 bildet ein freies Ende 72. Zwischen dem freien Ende 72 und dem zweiten Ende 18 der Schraubradwelle 12₂ ist ein zylindrischer Abschnitt 74 angeordnet, in welchem eine axial verlaufende Bohrung 76 angeordnet ist. Die Schraubradverzahnung 24 weist einen Fußkreisdurchmesser D3 auf, der größer ist als ein Durchmesser D4 des zylindrischen Abschnitts 74.

Obwohl im Zusammenhang mit Figur 7 eine Distanzscheibe 64 zur Montage vorgesehen ist, kann diese Distanzscheibe 64 auch entfallen, wenn die Lageraufnahme 44 - wie in Figur 3a gezeigt - einen vorderen, nach innen springenden Flansch 44a aufweist, und dieser umlaufende Flansch das Kugellager 30 zumindest an seinem Außenring 46 umgreift.

In Figur 9 ist ein weiteres Ausführungsbeispiel einer Lageraufnahme anhand einer Schnittdarstellung gezeigt, die im Wesentlichen derjenigen Schnittdarstellung der Figur 3 gleicht. Im Unterschied zu der in Figur 3 gezeigten Darstellung ist die Lageraufnahme 44 um das Axial- und Radiallager 26 gespritzt. Folglich wird beim Spritzen der Lageraufnahme 44 eine Einheit aus der Lageraufnahme 44 und dem Axial- und Radiallager 26 geschaffen, wodurch der Montageschritt des Einbringens der Axial- und Radiallagers 26 in die Lageraufnahme 44 entfällt und somit die Montage vereinfacht wird. Weiterhin kann auf die Verwendung der Distanzscheibe 64 verzichtet werden, so dass die Anzahl der Bauteile in dieser Ausführungsform reduziert wird.

### Bezugszeichenliste

- 10: Lagerungsanordnung
- 12, 12₁, 12₂: Schraubradwelle
- 14: Schraubrad-Planetengetriebe
- 16: erstes Ende
- 18: zweites Ende

- 20: erster Abschnitt
- 22: zweiter Abschnitt
- 24: Schraubradverzahnung
- 26: Axial- und Radiallager
- 28: Wälzlager

- 30: Kugellager
- 32: erster Lagerungsabschnitt
- 34: Planetenträger
- 36: Planetenrad
- 38: Planetenradverzahnung

- 40: zweiter Lagerungsabschnitt
- 42: Motor-Getriebeanordnung
- 44: Lageraufnahme
- 46: Außenring
- 48: Innenring

- 50: Vertiefung
- 52: Elektromotor
- 54: Vorsprung
- 56: Ausnehmung
- 58: Motorwelle
- 59: Motorwellenaufnahme
- 60: Innenschraubrad
- 62: Innenverzahnung
- 64: Distanzscheibe
- 66: Kragen
- 68: Absatz

- 70: Mitnahme
- 72: freies Ende
- 74: zylindrischer Abschnitt
- 76: Bohrung

- AP: Planetenradachse
- AS: Schraubradwellenachse
- D1: erster Durchmesser
- D2: zweiter Durchmesser
- D3: Fußkreisdurchmesser
- D4: Durchmesser zylindrischer Abschnitt

## Patentansprüche

1. Motor-Getriebeanordnung insbesondere für eine Verstelleinrichtung in Fahrzeugen zum Verstellen zweier zueinander verstellbarer Fahrzeugteile, umfassend
- einen Elektromotor (52) und
- ein Schraubrad-Planetengetriebe (14) umfassend eine Schraubradwelle (12) mit einer Schraubradverzahnung (24), welches um eine Schraubradwellenachse (AS) drehbar gelagert ist,
einen Planetenträger (34) mit zumindest drei Schraubrad-Planetenrädern (36), die jeweils um eine Planetenradachse (AP) drehbar im Planetenträger (34) gelagert sind und jeweils eine Planetenradverzahnung (38) aufweisen, wobei die Schraubrad-Planetenradachsen (AP) windschief zur Schraubradwellenachse (AS) verlaufen, ein Innenschraubrad (60) mit einer Innenverzahnung (62), welche mit der Planetenradverzahnung (38) in Eingriff steht, und
eine Lagerungsanordnung (10) zum Lagern der Schraubradwelle (12), welche einen ersten Lagerungsabschnitt (32) und einen zweiten Lagerungsabschnitt (40) aufweist, wobei
der erste Lagerungsabschnitt (32) außerhalb des Planententrägers (34) angeordnet ist und von einem Axial- und Radiallager (26) gebildet wird und wobei der zweite Lagerungsabschnitt (40) von den Schraubrad-Planetenrädern (36) gebildet wird, wobei die Planetenradverzahnung (38) im zweiten Lagerungsabschnitt (40) mit der Schraubradverzahnung (24) in Eingriff steht, wobei
- der Elektromotor (52) eine Motorwelle (58) aufweist, welche drehfest mit der Schraubradwelle (12) verbunden ist, und
- das Axial- und Radiallager (26) in einer Lageraufnahme (44) angeordnet ist, welche zwischen dem Elektromotor (52) und dem Innenschraubrad (60) angeordnet ist,
**dadurch gekennzeichnet, daß** die Lageraufnahme (44) drehfest mit dem Elektromotor (52) und dem Innenschraubrad (60) verbunden ist.

2. Motor-Getriebeanordnung nach Anspruch 1, **dadurch gekennzeichnet, dass** das Innenschraubrad (60) drehfest mit dem Elektromotor (52) verbunden ist.

3. Verfahren zum Herstellen einer Motor-Getriebeeinrichtung nach einem der Ansprüche 1 oder 2, umfassend folgende Schritte:
- Bereitstellen einer Schraubradwelle (12) mit einem ersten Ende (16), einem zweiten Ende (18) und einer Schraubradverzahnung (24),
- Bereitstellen eines ersten Lagerungsabschnitts (32) mittels eines Axial- und Radiallagers (26),
- Anordnen des Axial- und Radiallagers (26) in einer Lageraufnahme (44), welche um das Axial- und Radiallager gespritzt ist,
- Bereitstellen eines Planetenträgers (34) mit zumindest drei Schraubrad-Planetenrädern (36), die jeweils um eine Planetenradachse (AP) drehbar im Planetenträger (34) gelagert sind und jeweils eine Planetenradverzahnung (38) aufweisen, wobei die Schraubrad-Planetenradachsen (AP) windschief zur Schraubradwellenachse (AS) verlaufen und die Planetenräder (36) einen zweiten Lagerungsabschnitt (40) bilden,
- Einbringen der Schraubradwelle (12) in den ersten Lagerungsabschnitt (32) mit dem ersten Ende (16), und
- Einbringen der Schraubradwelle (12) in den zweiten Lagerungsabschnitt (40) mit dem zweiten Ende (18) derart, dass die Planetenradverzahnung (38) im zweiten Lagerungsabschnitt (40) mit der Schraubradverzahnung (24) in Eingriff stehen.

## Claims

1. Motor gear assembly, in particular for an adjustment device in motor vehicles for the adjustment of two, relative to each other adjustable motor vehicle parts, including
- an electromotor (52) and
- a helical planetary gear box (14) including
a helical gear shaft (12), with a helical gear wheel toothing (24), which is rotatably mounted around the axis of a helical gear shaft (AS),
a planetary gear carrier (34) with at least three helical planetary gear wheels (36), each of which is rotatably mounted in the planetary gear carrier (34) around an axis of a planetary gear wheel (AP) and each of which comprises a planetary gear wheel toothing (38), wherein the axes of the helical planetary gear wheels (AP) extend askew to the axis of the helical gear shaft (AS), an inner helical gear wheel (60), with an inner toothing (62), which engages with the planetary gear wheel toothing (38), and
a bearing arrangement (10) for bearing the helical gear shaft (12) which comprises a first bearing segment (32) and a second bearing segment (40),
wherein the first bearing segment (32) is arranged outside of the planetary gear carrier (34) and is formed of an axial and radial bearing (26), and
wherein the second bearing segment (40) is formed of the helical planetary gear wheels (36),
wherein the planetary gear wheel toothing (38) engages with the helical gear wheel toothing (24) in the second bearing segment (40), wherein
- the electromotor (52) comprises an engine shaft (58) which is non-rotatably connected to the helical gear shaft (12), and
- the axial and radial bearing (26) is arranged in a bearing seat (44) which is arranged between the electromotor (52) and the inner helical gear wheel (60), **characterized in that** the bearing seat (44) is non-rotatably connected to the electromotor (52) and to the inner helical gear wheel (60).

2. Motor gear assembly in accordance with claim 1,
**characterized in that** the inner helical gear wheel (60) is non-rotatably connected to the electromotor (52).

3. Method for producing a motor gear assembly in accordance with claim 1 or 2, comprising the following steps:
- providing a helical gear shaft (12) with a first end (16), a second end (18) and a helical gear wheel toothing (24),
- providing a first bearing segment (32) by means of an axial and radial bearing (26),
- arranging the axial and radial bearing (26) in a bearing seat (44) which is injection molded around the axial and radial bearing (26),
- providing a planetary gear carrier (34), having at least three helical planetary gear wheels (36), each of which is rotatably mounted in the planetary gear carrier (34) around an axis of a planetary gear wheel (AP) and each of which comprises a planetary gear wheel toothing (38), wherein the axes of the helical planetary gear wheels (AP) extend askew to the axis of the helical gear shaft (AS) and the planetary gear wheels (36) form a second bearing segment (40),
- introducing the helical gear shaft (12) into the first bearing segment (32) at its first end (16), and
- introducing the helical gear shaft (12) into the second bearing segment (40) at its second end (18) such that the planetary gear wheel toothing (38) engages with the helical gear wheel toothing (24) in the second bearing segment (40).

## Revendications

1. Ensemble moteur-transmission notamment pour une installation de réglage dans des véhicules, pour régler deux composants de véhicule réglables l'un par rapport à l'autre, comprenant :
- un moteur électrique (52), et
- un engrenage planétaire à roues hélicoïdales (14) comprenant un arbre de roue hélicoïdale (12) ayant une denture de roue hélicoïdale (24) montée à rotation autour d'un axe de roue hélicoïdale (AS),
* un porte-satellite (34) ayant au moins trois satellites à roue hélicoïdale (36) montés à rotation dans le porte-satellite (34) autour d'un axe de rotation de satellite (AP) et respectivement une denture de satellite (38), les axes des satellites à roue hélicoïdale (AP) sont inclinés par rapport à l'axe de la roue hélicoïdale (AS),
* une roue hélicoïdale intérieure (60) avec une denture intérieure (62) en prise avec la denture (38) de la roue hélicoïdale, et
* un montage de palier (10) pour recevoir l'arbre de roue hélicoïdale (12) comportant un premier segment de palier (32) et un second segment de palier (40),
* le premier segment de palier (32) à l'extérieur du porte-satellite (34) étant formé par un palier axial et radial (26) et le second segment de palier (40) étant formé par les satellites à roue hélicoïdale (36),
* la denture de satellite (38) étant en prise avec le second segment de palier (40) de denture de roue hélicoïdale (24),
- le moteur électrique (52) a un arbre de moteur (58) solidaire en rotation de l'arbre de roue hélicoïdale (12), et
- le palier axial et radial (26) est logé dans un logement de palier (44) entre le moteur électrique (52) et la roue hélicoïdale intérieure (60), ensemble **caractérisé en ce que**
le logement de palier (44) est relié solidairement en rotation au moteur électrique (52) et à la roue hélicoïdale intérieure (60).

2. Ensemble moteur-transmission selon la revendication 1,
**caractérisé en ce que**
la roue hélicoïdale intérieure (60) est reliée solidairement en rotation au moteur électrique (52).

3. Procédé de réalisation d'un ensemble moteur-transmission selon l'une des revendications 1 ou 2,
procédé consistant à :
- fournir un arbre de roue hélicoïdale (12) ayant une première extrémité (16), une seconde extrémité (18) et une denture de roue hélicoïdale (24),
- fournir un premier segment de palier (32) avec un palier axial et radial (26),
- installer le palier axial et radial (26) dans un logement de palier (44) injecté sur le palier axial et radial,
- fournir un porte-satellite (34) ayant au moins trois satellites à roue hélicoïdale (36) qui sont montés respectivement en rotation autour d'un axe de satellite (AP) dans le porte-satellite (34) et ayant respectivement une denture hélicoïdale (38), l'axe de roue planétaire-roue hélicoïdale (AP) étant incliné par rapport à l'axe de l'arbre de roue hélicoïdale (AS) et les satellites (36) forment un second segment de palier (40),
- introduire l'arbre de roue à vis (12) dans le premier segment de palier (32) par sa première extrémité (16), et
- introduire l'arbre de roue à vis (12) dans le second segment de palier (40) par la seconde extrémité (18) de façon que la denture de roue planétaire (38) soit en prise dans le second segment de palier (40) avec la denture de roue hélicoïdale (24).
